(19) Europäisches Patentamt
European Patent Office
Office européen des brevets

(11) **EP 3 919 693 B1**

(12) **EUROPÄISCHE PATENTSCHRIFT**

(45) Veröffentlichungstag und Bekanntmachung des Hinweises auf die Patenterteilung:
**23.08.2023  Patentblatt 2023/34**

(21) Anmeldenummer: **21177150.6**

(22) Anmeldetag: **01.06.2021**

(51) Internationale Patentklassifikation (IPC):
*E02F 9/26* (2006.01)       *B66C 13/48* (2006.01)
*G01G 9/00* (2006.01)       *G06Q 50/08* (2012.01)
*G07C 3/08* (2006.01)       *B66C 13/16* (2006.01)
*G01G 19/08* (2006.01)      *G06Q 10/0631* (2023.01)

(52) Gemeinsame Patentklassifikation (CPC):
**E02F 9/265; B66C 13/16; B66C 13/48;
G01G 19/086; G06Q 10/06313; G06Q 50/08;**
G07C 3/08

(54) **VERFAHREN UND SYSTEM ZUR BESTIMMUNG VON PROZESSDATEN EINES VON EINEM ARBEITSGERÄT DURCHGEFÜHRTEN ARBEITSPROZESSES**

METHOD AND SYSTEM FOR DETERMINING PROCESS DATA OF A WORKING PROCESS CARRIED OUT BY AN IMPLEMENT

PROCÉDÉ ET SYSTÈME DE DÉTERMINATION DES DONNÉES DE PROCESSUS D'UN PROCESSUS DE TRAVAIL EFFECTUES PAR UN APPAREIL DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2020   DE 102020114946**

(43) Veröffentlichungstag der Anmeldung:
**08.12.2021   Patentblatt 2021/49**

(73) Patentinhaber: **Liebherr-Hydraulikbagger GmbH
88457 Kirchdorf/Iller (DE)**

(72) Erfinder:
• **HOFMANN, Ferdinand
88457 Kirchdorf/Iller (DE)**
• **RENNER, Anton
70563 Stuttgart (DE)**
• **SAWODNY, Oliver
70563 Stuttgart (DE)**
• **WIND, Hannes
70563 Stuttgart (DE)**

(74) Vertreter: **Laufhütte, Dieter
Lorenz Seidler Gossel
Rechtsanwälte Patentanwälte
Partnerschaft mbB
Widenmayerstraße 23
80538 München (DE)**

(56) Entgegenhaltungen:
JP-A- 2020 020 154       US-A1- 2014 039 767
US-A1- 2018 087 240      US-A1- 2018 171 590
US-A1- 2019 017 249

## Beschreibung

Die vorliegende Erfindung betrifft ein Verfahren und ein System zur Bestimmung von Prozessdaten eines von einem Arbeitsgerät durchgeführten Arbeitsprozesses basierend auf der Ermittlung einer bewegten Masse durch ein Wiegesystem des Arbeitsgeräts und der Erfassung eines einen Zustand des Arbeitsgeräts und/oder einen Arbeitsschritt betreffenden Parameters sowie ein Arbeitsgerät mit einem solchen System.

Über die letzten Jahre hat die Verwertung von Daten, die während der Durchführung von Arbeitsprozessen durch Arbeitsgeräte wie Bagger, Krane oder dergleichen anfallen oder für eine nachträgliche Verwertung eigens gemessen werden, kontinuierlich zugenommen. Dabei kann es sich nicht nur um für die Steuerung / Regelung des Arbeitsgeräts unmittelbar erforderliche Daten wie Maschinenzustandsdaten oder um Leistungsdaten des Arbeitsgeräts handeln, sondern es werden in zunehmendem Maße auch Prozessdaten ermittelt, die nachgelagerten Systemen wie z.B. Auftrags- und Baustellenleitsystemen zur Verfügung gestellt werden, um die Arbeitsprozesse zu überwachen und ggf. zu optimieren.

Zur Ermittlung solcher Prozessdaten wird bisher auf externe Systeme wie stationäre Waagen zur Erfassung der umgeschlagenen Massen oder externe Abrechnungs- oder Verwaltungssysteme zurückgegriffen. Die Ermittlung der relevanten Informationen muss also bisher nachgeschaltet und größtenteils händisch durchgeführt werden, was zeitaufwändig, fehleranfällig und personalkostenintensiv ist.

Aus der US 2019/0017249 A1 ist eine Baumaschine mit einer Arbeitsvorrichtung bekannt, wobei eine Arbeitsmenge der Baumaschine basierend auf Positionen einer Bauzieloberfläche und einer aktuellen Oberfläche berechnet und eine vorhergesagte erforderliche Arbeitszeit basierend auf der berechneten Arbeitsmenge und einer Verarbeitungsgeschwindigkeit der Arbeitsvorrichtung ermittelt wird.

Der vorliegenden Erfindung liegt daher die Aufgabe zugrunde, die Ausführung, Planung und Optimierung von mittels Arbeitsgeräten durchgeführten Arbeitsprozessen auf der Grundlage von Prozessdaten zu erleichtern, die den jeweiligen Arbeitsprozess charakterisieren.

Die Lösung dieser Aufgabe gelingt durch ein Verfahren mit allen Merkmalen des Anspruchs 1 sowie mittels eines Systems mit allen Merkmalen des Anspruchs 13. Das erfindungsgemäße Verfahren dient der Bestimmung von Prozessdaten eines von einem Arbeitsgerät durchgeführten Arbeitsprozesses und umfasst folgende Schritte:

- Ermitteln der Masse einer durch das Arbeitsgerät bewegten Nutzlast mittels eines Wiegesystems des Arbeitsgeräts, d.h. mittels eines integrierten Wiegesystems,
- Erfassen mindestens eines einen Zustand des Arbeitsgeräts (z.B. einen Maschinenzustand oder Leistungszustand) und/oder einen Arbeitsschritt des aktuellen Arbeitsprozesses betreffenden bzw. charakterisierenden Parameters,
- Bestimmen mindestens eines den aktuellen Arbeitsprozess betreffenden bzw. charakterisierenden Prozessparameters unter Berücksichtigung der ermittelten Nutzlastmasse und des erfassten Parameters,
- Bestimmen mindestens eines einen verbleibenden Teil des aktuellen Arbeitsprozesses betreffenden bzw. charakterisierenden Prädiktionswerts, und
- Ausgabe eines auf dem Prädiktionswert basierenden Signals an den Bediener des Arbeitsgeräts, um diesen bei der Durchführung des aktuellen Arbeitsprozesses zu assistieren.

Die erfindungsgemäße Bestimmung der Prozessdaten erfolgt anhand eines integrierten Systems, sodass ein Rückgriff auf externe Hilfsmittel nicht mehr notwendig ist. Das integrierte Wiegesystem stellt Daten bezüglich der bewegten Nutzlast zur Verfügung, welche mit weiteren Daten betreffend einen Zustand des Arbeitsgeräts und/oder den Arbeitsprozess zu den gewünschten Prozessdaten verknüpft werden. Alle hierfür erforderlichen Daten werden durch das Arbeitsgerät selbst erfasst und/oder dem Arbeitsgerät direkt zur Verfügung gestellt, beispielsweise über ein externes Rechnersystem wie eine Cloud, ein Leitsystem etc.

Dadurch ergibt sich eine erhebliche Vereinfachung des Arbeitsprozesses basierend auf effizienter Datenerfassung und Datenanalyse bzw. -auswertung. Eine zusätzliche Ermittlung von Prozessdaten in nachgelagerten Systemen oder durch manuelle Berechnungen / Auswertungen ist nicht mehr nötig. Dies verringert nicht nur die Fehleranfälligkeit des Systems sowie die Kosten des Arbeitsauftrags, sondern steigert zudem die Arbeitseffizienz. Eine Optimierung des aktuellen Arbeitsprozesses sowie eine entsprechende Assistenz für den Bediener des Arbeitsgeräts zur Umsetzung entsprechender den Arbeitsprozess optimierender Maßnahmen ist nun direkt und in Echtzeit während der Durchführung des Arbeitsprozesses möglich. Neben einer Integration des Arbeitsgeräts in vernetzte Prozess- und Arbeitsleitsysteme ist es möglich, in einem vernetzten Einsatzverbund, beispielsweise einem Baustellen- oder Hafenverbund, den Materialtransport durch nachgelagerte Systeme anhand der erfindungsgemäß ermittelten Daten zu organisieren.

Die Bestimmung eines einen verbleibenden Teil des aktuellen Arbeitsprozesses betreffenden Prädiktionswerts, d.h. Vorhersagewerts, ermöglicht eine quantitative Abschätzung bezüglich eines noch verbleibenden bzw. auszuführenden Teils des aktuellen Arbeitsprozesses. Auf dieser Grundlage lassen sich geeignete Optimierungen des Arbeitsablaufs vornehmen, wobei eine entsprechende Unterstützung des Bedieners zur Implementierung geeigneter Maßnahmen (sowie generell zur Durchführung des Arbeitsprozesses) erfolgt.

Unter einem Zustand des Arbeitsgeräts kann sowohl ein Maschinenzustand, also beispielsweise eine Position, Geschwindigkeit und/oder Beschleunigung eines Bauteils / Werkzeugs des Arbeitsgeräts, als auch ein Leistungszustand des Arbeitsgeräts wie z.B. ein Energie- bzw. Treibstoffverbrauch, Motorzustandsparameter etc. verstanden werden. Bei den ermittelten Prozessdaten handelt es sich vorzugsweise um sogenannte "Key Performance Indicators" (KPIs), die hinsichtlich der Effizienz oder anderer Zielsetzungen des aktuellen Arbeitsprozesses besonders relevant und aussagekräftig sind. Bei dem auf dem Prädiktionswert basierenden Signal handelt es sich insbesondere um Daten, die zur Generierung einer Ausgabe, beispielsweise einer optischen Anzeige, der entsprechenden Informationen dienen.

Der hier verwendete Begriff "integriertes System" schließt dabei nicht aus, dass Daten von einem externen Rechnersystem wie einer Cloud, einem Leitsystem (z.B. Planungs-, Auftrags-, Abrechnungs-, Verwaltungs-, und/oder Baustellenleitsystem) oder dergleichen zur Verfügung gestellt und/oder Berechnungen (beispielsweise die Berechnung des mindestens einen Prozessparameters, des mindestens einen Prädiktionswerts etc.) an ein solches externes Rechnersystem ausgelagert werden. Die Kommunikation mit dem externen Rechnersystem erfolgt dabei vorzugsweise drahtlos. Der Begriff "extern" kann sowohl außerhalb des Arbeitsgeräts als auch außerhalb des Maschinenverbunds bedeuten.

Vorteilhafte Ausführungsformen der Erfindung ergeben sich aus den Unteransprüchen und der nachfolgenden Beschreibung.

Bei dem zur Bestimmung der Masse einer bewegten Nutzlast (auch als Umschlagmenge oder Umschlagmasse bezeichnet) verwendeten integrierten Wiegesystem handelt es sich vorzugsweise um ein System gemäß der DE 10 2018 126 809 A1, auf deren Offenbarungsgehalt hiermit explizit Bezug genommen wird. Alternativ oder zusätzlich dazu kann jedoch auch ein anderes Wiegesystem zum Einsatz kommen, beispielsweise basierend auf einem anderen modellbasierten Ansatz zur indirekten Bestimmung bzw. Schätzung der Umschlagmasse, auf einer Schätzung der Masse anhand von Kennfeldern der an den Aktuatoren des Arbeitsgeräts angreifenden Kräfte / Drehmomente oder auf einer direkten physischen Erfassung der bewegten Nutzlastmasse mittels einer am Arbeitsgerät angebrachten Wiegevorrichtung bzw. Waage.

In einer Ausführungsform ist vorgesehen, dass die ermittelte Masse der bewegten Nutzlast auf der Erfassung einer in einem Arbeitsschritt des aktuellen Arbeitsprozesses bewegten Nutzlastmasse basiert. Sie kann also entweder eine über mehrere (z.B. über eine bestimmte Anzahl von vorangegangenen oder über alle vorangegangenen) Arbeitsschritte akkumulierte Nutzlastmasse oder die in einem einzigen Arbeitsschritt bewegte Nutzlastmasse darstellen.

In einer weiteren Ausführungsform ist vorgesehen, dass zur Erfassung der in einem einzelnen Arbeitsschritt des aktuellen Arbeitsprozesses bewegten Nutzlastmasse eine Schätzung auf Grundlage mindestens eines einen aktuellen Zustand des Arbeitsgeräts betreffenden und von einer Erfassungseinheit des Arbeitsgeräts gemessenen Zustandsparameters (= Maschinenzustand), sowie mindestens eines die Konfiguration des Arbeitsgeräts betreffenden Systemparameters durchgeführt wird. Bei dem Maschinenzustand kann es sich um eine Winkelposition, -geschwindigkeit und/oder -beschleunigung eines Schwenkelements, Auslegerelements, Stielelements, Werkzeugs und/oder Hubwerks des Arbeitsgeräts handeln.

In einer weiteren Ausführungsform ist vorgesehen, dass der mindestens eine erfasste Parameter ein definierter oder definierbarer Zeitraum, die Zeitdauer eines Arbeitsschritts, eine definierte oder definierbare Anzahl von Arbeitsschritten oder eine Kennzahl, beispielsweise Leistungskennzahl, des Arbeitsgeräts ist. Der erfasste Parameter kann auch einen Zustand des Arbeitsgeräts betreffen, also einen Maschinenzustand wie beispielsweise eine Winkelposition, -geschwindigkeit und/oder -beschleunigung eines Schwenkelements, Auslegerelements, Stielelements, Werkzeugs und/oder Hubwerks des Arbeitsgeräts oder einen anderen Zustandsparameter, oder einen Leistungszustand des Arbeitsgeräts wie z.B. einen Energieverbrauch etc. Idealerweise wird nicht nur ein einziger, sondern mehrere Parameter erfasst, die mehrere der vorgenannten Daten repräsentieren.

Die vorgenannten Parameter werden idealerweise von Erfassungssystemen des Arbeitsgeräts gemessen und/oder von einer Steuereinheit aus gemessenen und/oder empfangenen Rohdaten errechnet, wobei letzteres auch das Empfangen von Daten von einem externen Rechnersystem und/oder das Durchführen von Berechnungen durch ein solches externes Rechnersystem umfassen kann. So lässt sich der aktuelle Maschinenzustand beispielsweise über entsprechende Sensoren erfassen, die die Position, Geschwindigkeit und/oder Beschleunigung direkt oder indirekt messen. Ferner können Kräfte / Drehmomente über Drücke in Aktuatoren wie z.B. Zylindereinheiten bestimmt werden. Zur Berechnung von Daten durch ein externes Rechnersystem können diesem Messdaten durch das Arbeitsgerät übermittelt werden, vorzugsweise kabellos.

Die Anzahl von Arbeitsschritten und Zeiträume können von einer Steuereinheit des Arbeitsgeräts selbst und/oder einem externen Rechnersystem berechnet werden. Statische Werte wie z.B. Kennzahlen bzw. Leistungskennzahlen des Arbeitsgeräts, dessen Konfiguration betreffende Werte, Geländedaten etc. können beispielsweise in der Steuereinheit bzw. in einem Speicher hinterlegt sein oder über eine - vorzugsweise kabellose - Kommunikation mit einem externen Rechnersystem zur Verfügung gestellt werden. Dadurch müssen keine zeitaufwändigen externen Messungen außerhalb des Arbeitsgeräts durchgeführt werden, sondern alle wesentlichen Schritte werden vom integrierten System des Arbeitsgeräts durchgeführt oder bestimmte Daten vor dem Einsatz oder in Echtzeit zur Verfügung gestellt.

In einer weiteren Ausführungsform ist vorgesehen, dass die Bestimmung des mindestens einen Prädiktionswerts unter Berücksichtigung von Daten erfolgt, die den Umfang des aktuellen Arbeitsprozesses betreffen, beispielsweise eine Gesamtumschlagmenge bzw. -masse, eine Gesamtzeitdauer, eine zurückzulegende, abzutragende oder anderweitig zu bearbeitende Strecke / Fläche / Volumen oder dergleichen. Die Daten werden vorzugsweise über eine manuelle Eingabe durch den Bediener des Arbeitsgeräts und/oder eine Übermittlung von einem externen Rechnersystem bereitgestellt und von einer Steuereinheit entsprechend verarbeitet.

In einer weiteren Ausführungsform ist vorgesehen, dass der mindestens eine Prädiktionswert eine verbleibende Zeitdauer, eine verbleibende Umschlagmenge bzw. zu bewegende Nutzlastmasse, ein verbleibender Aushub (insbesondere ein Volumen), eine verbleibende Anzahl von Arbeitsschritten bis zur Beendigung des aktuellen Arbeitsprozesses, ein zu erwartender Energie- bzw. Treibstoffverbrauch des Arbeitsgeräts oder eine noch zurückzulegende Strecke des Arbeitsgeräts oder eines oder mehrerer Bauteile des Arbeitsgeräts ist oder betrifft. Die Ermittlung des einen oder der mehreren Prädiktionswerte erlaubt eine realistische Abschätzung hinsichtlich eines bzw. des noch verbleibenden Teils des aktuellen Arbeitsprozesses und stellt die Grundlage für eine Optimierung des Arbeitsprozesses dar. Da die notwendigen Datenerhebungen und -auswertungen von einem integrierten System durchgeführt werden (ggf. einschließlich der Berechnung und/oder Übermittlung von Daten durch ein mit einer Steuereinheit des Arbeitsgeräts kommunizierendes externes Rechnersystem), ist eine zeitnahe Überwachung und/oder Optimierung des aktuellen Arbeitsprozesses sowie eine entsprechende Assistenz des Bedieners möglich.

In einer weiteren Ausführungsform ist vorgesehen, dass unter Berücksichtigung des mindestens einen bestimmten Prädiktionswerts eine Anpassung am Arbeitsgerät vorgenommen wird, insbesondere eine Veränderung mindestens eines Leistungsparameters, eine Änderung des Ablaufs eines Arbeitsschritts und/oder eine Änderung einer Konfiguration des Arbeitsgeräts, wobei die Anpassung manuell durch eine Benutzereingabe und/oder automatisch durch eine Steuereinheit des Arbeitsgeräts vorgenommen wird.

Alternativ oder zusätzlich ist auch eine bloße Ausgabe bzw. Anzeige von Informationen auf Grundlage des mindestens einen bestimmten Prädiktionswerts möglich, beispielsweise zur Anzeige von statistischen Daten an den Bediener des Arbeitsgeräts und/oder zur Dokumentation für eine spätere Auswertung.

In einer weiteren Ausführungsform ist vorgesehen, dass diese Anpassung unter Minimierung oder Maximierung eines Prädiktionswerts, d.h. als Optimierung, und/oder unter Berücksichtigung mindestens eines definierten oder einstellbaren Kriteriums, insbesondere einer maximalen Zeitdauer, einer maximalen Umschlagmenge bzw. bewegten Nutzlastmasse, eines maximalen Energie- bzw. Treibstoffverbrauchs des Arbeitsgeräts und/oder einer maximalen zurückgelegten Strecke des Arbeitsgeräts und/oder eines oder mehrerer Bauteile des Arbeitsgeräts, erfolgt.

So ist es beispielsweise denkbar, dass anhand der mittels des Wiegesystems erfassten bisher bewegten Umschlagmenge und der seit Beginn des Arbeitsprozesses vergangenen Zeit in Kombination mit entsprechenden Zielvorgaben (insbesondere der Gesamtumschlagmenge) eine zu erwartende Gesamtzeit für den aktuellen Arbeitsprozess ermittelt wird. Auf der Grundlage von weiteren ermittelten Prozessdaten, beispielsweise einer (Werkzeug-)Auslastung pro Arbeitsschritt, einer vom Arbeitsgerät zurückgelegten Strecke oder eines Pfads, entlang welchem ein Bauteil (z.B. Werkzeug oder Hubwerk) bewegt wurde, - entweder insgesamt oder für einen bestimmten Arbeitsschritt / Zyklus betrachtet - ist es nun möglich, den Arbeitsablauf für den verbleibenden Teil des Arbeitsprozesses so anzupassen, dass die Prädiktionswerte optimiert, d.h. minimiert oder maximiert werden oder bestimmte Kriterien / Zielvorgaben eingehalten werden. Dies kann z.B. über eine bessere Ausnutzung der Kapazitäten des Arbeitsgeräts bzw. eines Werkzeugs des Arbeitsgeräts, oder eine Optimierung einer Strecke oder eines Pfads erfolgen. Ebenfalls ist es vorstellbar, Leistungsparameter des Arbeitsgeräts so anzupassen, dass beispielsweise weniger Treibstoff pro Arbeitsschritt verbraucht wird.

In einer weiteren Ausführungsform ist vorgesehen, dass die Bestimmung des Prädiktionswerts unter Berücksichtigung eines Geländemodells des während des aktuellen Arbeitsprozesses von dem Arbeitsgerät zu bearbeitenden und/oder zu befahrenden Arbeitsbereichs erfolgt. Das Geländemodell ist vorzugsweise dreidimensional und kann entweder in einer Steuereinheit bzw. einem Speicher des Arbeitsgeräts hinterlegt oder von einem externen Rechnersystem zur Verfügung gestellt sein. Ferner kann das Arbeitsgerät eine Positionserfassungseinheit, beispielsweise ein GPS-Modul, aufweisen, um die aktuelle Position des Arbeitsgeräts und/oder eines oder mehrerer seiner Bauteile im dreidimensionalen Raum in Bezug zu dem Geländemodell erfassen zu können.

In einer weiteren Ausführungsform ist vorgesehen, dass zudem die Bahn berücksichtigt wird, entlang derer ein die Nutzlast bewegendes Werkzeug und/oder ein das Werkzeug bewegendes Hubwerk des Arbeitsgeräts während eines vergangenen oder mehrerer vergangener Arbeitsschritte in Bezug zu dem Geländemodell und/oder Zielgeländemodell verfahren wurde, wobei vorzugsweise ein bisher bewegtes oder abgetragenes Geländevolumen ermittelt wird.

Vorzugsweise ist ein das geplante Endergebnis des aktuellen Arbeitsprozesses betreffendes Zielgeländemodell definiert (d.h. hinterlegt oder übermittelt) oder definierbar, welches der Bestimmung des Prädiktionswerts zugrunde gelegt wird. Das Zielgeländemodell kann dem vorgenannten Geländemodell entsprechen, welches in einer dem Endergebnis des aktuellen Arbeitsprozesses entsprechenden Weise modifiziert wurde, beispielsweise indem ein vom Arbeitsgerät insgesamt abzutragendes Volumen digital entfernt wurde.

Steht nun das den ursprünglichen, unbearbeiteten Arbeitsbereich abbildende Geländemodell zur Verfügung und ist die Bahn, entlang derer das Arbeitsgerät bzw. ein das Gelände abtragendes Werkzeug im Koordinatensystem des Geländemodells bewegt wurde / wird bekannt, kann eine Prädiktion bzw. Abschätzung der noch anfallenden Lastmasse angesichts eines geplanten Aushubs (= Zielvorgabe) realisiert werden. Über die verfahrene Bahn des Werkzeugs kann mit dem Geländemodell das abgetragene Volumen abgeschätzt werden. Zum Beispiel lässt sich durch die Werkzeugposition und dem Höhenprofil des Geländes eine Volumendifferenz berechnen. Das Höhenprofil des Geländes wird dabei digital entsprechend der Eindringtiefe des Werkzeugs angepasst. Die Anpassung des Geländemodells anhand während des Arbeitsprozesses erfasster Positionsdaten kann in regelmäßigen Abständen, beispielsweise nach jedem Arbeitsschritt oder in bestimmten Zeitintervallen erfolgen.

In Kombination mit dem Zielgeländeprofil kann eine Volumendifferenz gebildet werden, die das verbleibende und voraussichtlich anfallende abzutragende Volumen beschreibt. Zusammen mit der Erfassung der dem abgetragenen Volumen entsprechenden Gesamtmasse kann ein Wert für die dem abgetragenen Volumen entsprechende Dichte berechnet und dem noch anfallenden Volumen zugrunde gelegt werden, um eine voraussichtlich anfallende Masse / Last zu ermitteln.

In einer weiteren Ausführungsform ist vorgesehen, dass der Prozessparameter eine insgesamt bewegte Nutzlastmasse bzw. Umschlagmenge in einem definierten oder definierbaren Zeitraum oder für eine Anzahl von Arbeitsschritten, eine bewegte Nutzlastmasse bzw. Umschlagmenge pro definierter oder definierbarer Zeiteinheit oder pro Arbeitsschritt, ein Energie- bzw. Treibstoffverbrauch des Arbeitsgeräts pro Arbeitsschritt oder pro bewegter Nutzlastmasse, eine Zeitdauer pro Arbeitsschritt oder eine Auslastung des Arbeitsgeräts / Werkzeugs insgesamt oder pro Arbeitsschritt ist oder betrifft.

Erfindungsgemäß ist vorgesehen, dass das ausgegebene, auf dem Prädiktionswert basierende Signal ein erfasster Parameter, ein bestimmter Prädiktionswert, eine bisher bewegte Nutzlastmasse / Umschlagmenge, die Differenz einer bisher bewegten Nutzlastmasse zu einer definierten oder definierbaren Zielmasse und/oder eine Vorgabe für eine in einem zukünftigen Arbeitsschritt aufzunehmende bzw. zu bewegende Nutzlastmasse / -volumen ist oder betrifft. Das Signal wird vorzugsweise auf einer Anzeigeeinheit optisch angezeigt und umfasst mehrere Anzeigedaten.

Vorzugsweise ist eine graphische Anzeigeeinheit in der Fahrerkabine des Arbeitsgeräts vorhanden, auf der die zuvor genannten oder andere Werte numerisch und/oder graphisch angezeigt werden und dem Bediener beim Arbeitsvorgang optisch assistieren. Hier ist es beispielsweise denkbar, das oben angesprochene Geländemodell, Zielgeländemodell und/oder die aktuelle Position / Bahn des Arbeitsgeräts und/oder eines Werkzeugs anzuzeigen. Die Anzeigen können beispielsweise nebeneinander oder überlagert erfolgen. Die graphischen Anzeigen können durch numerische Anzeigen der entsprechenden Werte / Parameter ergänzt werden. Zusätzlich oder alternativ zu einer optischen Anzeige ist auch die Ausgabe von akustischen Signalen möglich, beispielsweise wenn ein bestimmter räumlicher Bereich verlassen oder wenn ein bestimmtes Kriterium oder ein bestimmter Prädiktionswert über- oder unterschritten oder sich diesem angenähert wird.

Ferner ist vorzugsweise eine Eingabeeinheit vorhanden, über die der Bediener Eingaben tätigen kann um beispielsweise bestimmte Zielvorgaben zu definieren oder zu ändern, um Darstellungskriterien der angezeigten Werte zu verändern oder um Berechnungskriterien für die Prozessdaten und/oder den Prädiktionswert festzulegen oder zu verändern.

Die vorliegende Erfindung betrifft weiterhin ein System zur Bestimmung von Prozessdaten eines von einem Arbeitsgerät durchgeführten Arbeitsprozesses, umfassend:

- ein Hubwerk, welches ausgelegt ist, eine Nutzlast entlang eines Pfades zu bewegen, insbesondere mittels eines am Hubwerk montierten Werkzeugs (wie z.B. eines Greifers, einer Baggerschaufel etc.),
- ein Wiegesystem, mittels welchem die Masse einer in einem einzelnen Arbeitsschritt des aktuellen Arbeitsprozesses bewegten Nutzlast ermittelbar ist,
- eine Erfassungseinheit, mittels welchem mindestens ein einen Zustand des Arbeitsgeräts und/oder einen Arbeitsschritt des aktuellen Arbeitsprozesses betreffender bzw. charakterisierender Parameter erfassbar ist,
- eine Steuereinheit, welche ausgelegt ist, mindestens einen den aktuellen Arbeitsprozess betreffenden Prozessparameter unter Berücksichtigung der ermittelten Nutzlastmasse und des erfassten Parameters zu bestimmen und mindestens einen einen verbleibenden Teil des aktuellen Arbeitsprozesses betreffenden Prädiktionswert zu bestimmen, und
- eine Ausgabeeinheit, über welche das auf dem bestimmten Prädiktionswert basierende Signal an den Bediener des Arbeitsgeräts ausgebbar ist, wobei das ausgegebene Signal ein erfasster Parameter, ein bestimmter Prädiktionswert, eine bisher bewegte Nutzlastmasse, die Differenz einer bisher bewegten Nutzlastmasse zu einer definierten oder definierbaren Zielmasse und/oder eine Vorgabe für eine in einem zukünftigen Arbeitsschritt aufzunehmende bzw. zu bewegende Nutzlastmasse ist oder betrifft.

Das System ist ausgelegt, das erfindungsgemäße Verfahren durchzuführen. Dabei ergeben sich offensichtlich dieselben Vorteile und Eigenschaften wie für das erfindungsgemäße Verfahren, weshalb an dieser Stelle auf eine wiederholende Beschreibung verzichtet wird. Die obigen Ausführungen hinsichtlich der möglichen Ausgestaltungen des erfindungsgemäßen Verfahrens gelten daher für das System entsprechend.

Die Steuereinheit kann, insbesondere über geeignete Schnittstellen und vorzugsweise drahtlos, mit einem externen Rechnersystem wie einer Cloud, einem Leitsystem (z.B. Planungs-, Auftrags-, Abrechnungs-, Verwaltungs-, und/oder Baustellenleitsystem) oder dergleichen in kommunikativer Verbindung stehen. Dabei können von dem externen Rechnersystem Daten zur Verfügung gestellt und/oder Berechnungen (beispielsweise die Berechnung des Prozessparameters, des Prädiktionswerts etc.) an ein solches externes Rechnersystem ausgelagert werden. Hierzu können dem externen Rechnersystem Messwerte oder andere Daten von dem Arbeitsgerät übermittelt werden, auf deren Grundlage dann Berechnungen durchgeführt und die Ergebnisse wieder an das Arbeitsgerät übermittelt werden.

In einer Ausführungsform ist vorgesehen, dass das System einen oder mehrere Sensoren umfasst, mittels welchem mindestens ein einen Zustand des Arbeitsgeräts und/oder einen Arbeitsschritt des aktuellen Arbeitsprozesses betreffender Parameter und/oder eine auf das Hubwerk wirkende Kraft / Drehmoment erfassbar ist.

Die vorliegende Erfindung betrifft ferner ein Arbeitsgerät mit einem erfindungsgemäßen System, d.h. das Arbeitsgerät weist eine Steuereinheit auf, welche ausgelegt ist, das erfindungsgemäße Verfahren auszuführen. Auch hier ergeben sich die zuvor beschriebenen Eigenschaften und Vorteile. Bei dem Arbeitsgerät kann es sich um jedwede Arbeitsmaschine handeln, mit der Material bewegbar bzw. umschlagbar ist, beispielsweise einen Kran (z.B. Hafenkran), Bagger oder dergleichen.

Weitere Merkmale, Einzelheiten und Vorteile der Erfindung ergeben sich aus den nachfolgend anhand der Figuren erläuterten Ausführungsbeispielen. Es zeigen:

Figur 1: eine schematische Darstellung der Komponenten des erfindungsgemäßen Systems gemäß einem Ausführungsbeispiel; und

Figur 2: eine schematische Darstellung der Schritte des erfindungsgemäßen Verfahrens und der darin verwendeten Informationen bzw. Daten gemäß einem Ausführungsbeispiel.

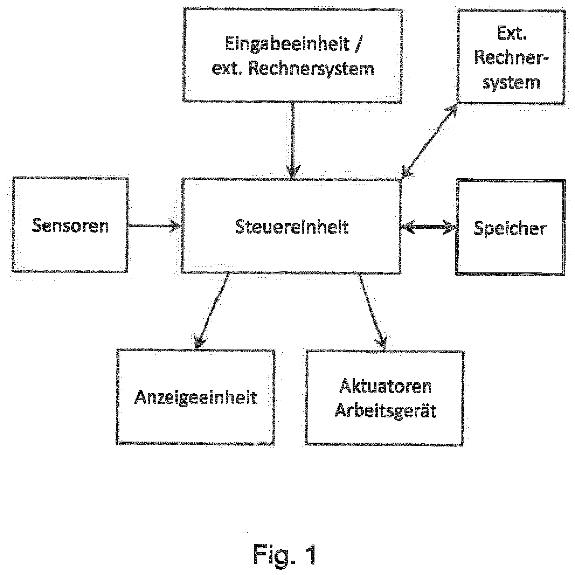

Die Figur 1 zeigt eine schematische Darstellung eines Ausführungsbeispiels des erfindungsgemäßen Systems zur Bestimmung von Prozessdaten eines von einem Arbeitsgerät durchgeführten Arbeitsprozesses. Zentrales Element ist eine Steuereinheit, welche die Berechnungen und Auswertungen vornimmt, die zur Bestimmung der Prozessdaten und Prädiktionswerte erforderlich sind, wobei dies eine Kommunikation der Steuereinheit mit einem externen Rechnersystem einschließen kann, welches einen Teil oder alle Berechnungen außerhalb des Arbeitsgeräts durchführt und die Ergebnisse an das Arbeitsgerät bzw. die Steuereinheit übermittelt. Mit anderen Worten können die Berechnungen und Auswertungen entweder vollständig durch die Steuereinheit des Arbeitsgeräts, vollständig durch das externe Rechnersystem oder zum Teil durch die Steuereinheit und zum Teil durch das externe Rechnersystem durchgeführt werden.

Als Input erhält die Steuereinheit von mehreren Sensoren Daten, welche einen Zustand des Arbeitsgeräts bzw. Maschinenzustand charakterisieren. Dabei kann es sich um Sensordaten zur Position, Geschwindigkeit und/oder Beschleunigung eines Hubelements bzw. eines daran befestigten Werkzeugs handeln, mit welchem die Nutzlast bewegt wird. Ferner können Daten zu an dem Hubwerk / Werkzeug angreifenden Kräften oder Drehmomenten erfasst und an die Steuereinheit übermittelt werden.

Aus den Sensordaten und auf einem Speicher hinterlegten Daten wie z.B. Systemparametern bestimmt die Steuereinheit eine bewegte Nutzlastmasse. Das so implementierte Wiegesystem des Arbeitsgeräts ist in der DE 10 2018 126 809 A1 ausführlich beschrieben. Neben der ermittelten Nutzlastmasse werden weitere Daten herangezogen, welche einen Maschinenzustand und/oder einen Arbeitsschritt des aktuellen Arbeitsprozesses betreffen. Quelle dieser zusätzlichen Daten sind neben den Sensoren des Arbeitsgeräts ein externes Rechnersystem (beispielsweise eine Cloud, ein Baustellenleitsystem, ein Verwaltungssystem oder dergleichen), welches die Daten drahtlos an das Arbeitsgerät übermitteln kann (in diesem Fall weist das Arbeitsgerät eine entsprechende Sende- und Empfangseinrichtung auf), eine manuelle Eingabe durch den Bediener über eine Eingabeeinheit und/oder auf einem Speicher hinterlegte Daten. Ferner liegen der Steuereinheit Umgebungsdaten vor, beispielsweise in Form eines dreidimensionalen Geländemodells.

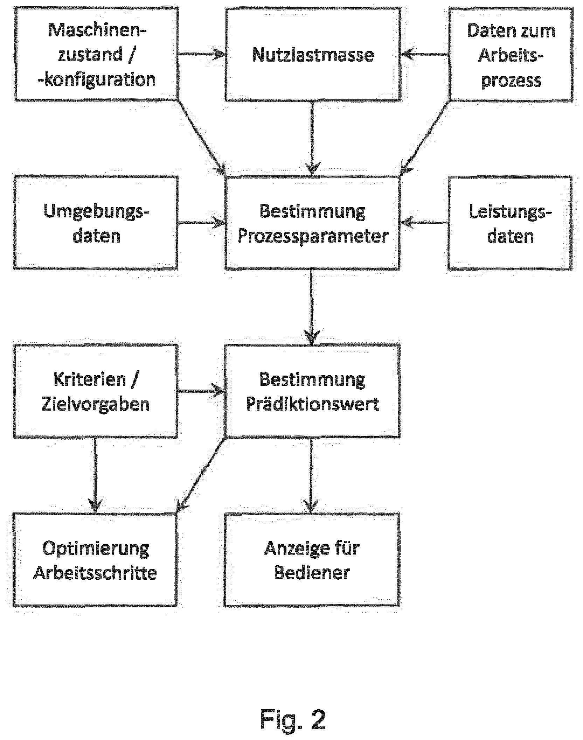

Während die Figur 1 das erfindungsgemäße System im Hinblick auf dessen Komponenten darstellt, illustriert die Figur 2 ein Ausführungsbeispiel des erfindungsgemäßen Verfahrens im Lichte der einzelnen Schritte und Informationsquellen, die in die Berechnungen und Analysen der Steuereinheit eingehen. Die Steuereinheit verknüpft die Informationen zur bewegten Nutzlastmasse mit den zusätzlichen Maschinenzustands-, Leistungs-, Umgebungs- und/oder Arbeitsprozessinformationen und generiert daraus einen oder mehrere Prozessparameter bzw. Prozessdaten. Konkrete Beispiele hierfür sind weiter unten beschrieben. Aus den berechneten Prozessparametern, den darin eingehenden Informationen sowie vorgegebenen Kriterien bzw. Zielvorgaben (welche selbst wiederum Umgebungsdaten wie z.B.

ein Zielgeländemodell umfassen können) bestimmt die Steuereinheit mindestens einen Prädiktionswert, welcher einen oder den verbleibenden Teil des aktuellen Arbeitsprozesses betrifft, beispielsweise eine verbleibende Zeit oder zu bewegende Nutzlastmasse.

Schließlich werden ausgehend von den bestimmten Prozessdaten und Prädiktionswerten Ausgabedaten generiert, welche dem Bediener auf einer Ausgabeeinheit, insbesondere einem Display in einer Fahrerkabine des Arbeitsgeräts, angezeigt werden. Dadurch wird der Bediener bei der restlichen Ausführung des Arbeitsprozesses unterstützt. Zudem erfolgt eine Optimierung der bis zum Ende des Arbeitsprozesses verbleibenden Arbeitsschritte ausgehend von den Prädiktionswerten und definierten Kriterien / Zielvorgaben. Dies kann automatisch durch entsprechende Steuerung / Regelung der Aktuatoren des Arbeitsgeräts, beispielsweise des Hubwerks, oder manuell durch eine Steuerung des Bedieners erfolgen, welcher entsprechende Anweisungen zur Modifikation der Arbeitsschritte durch die Anzeigeeinheit dargestellt bekommt.

Die hier dargestellten Ausführungsbeispiele stellen jeweils nur eine unter vielen Möglichkeiten dar, die beschriebenen Informationen zu verknüpfen und zur Bestimmung von Prozessdaten und Prädiktionswerten heranzuziehen. Im Folgenden sollen nun eine Reihe von Beispielen für mögliche ermittelbare Prozessdaten, Prädiktionswerte und für Assistenzmöglichkeiten gegeben werden.

Das Wiegesystem des Arbeitsgeräts wird erfindungsgemäß verwendet, um zusammen mit weiteren Informationen Prozessdaten zu ermitteln. Hierfür werden neben den Wiegedaten noch weitere Informationen des Arbeitsgeräts herangezogen. Diese Informationen betreffen unter anderem die Leistungskennzahlen des Arbeitsgeräts, sowie aktuelle Leistungs- und Zustandsdaten. Bei den generierten Prozessdaten handelt es sich beispielsweise um die folgenden Informationen und KPIs (Key Performance Indicators):
Beispiel P1: Gesamtumschlagsleistung bzw. gesamte bewegte Nutzlastmasse ackumuliert über einen definierten Zeitraum.

Der Zeitraum kann entweder durch den Maschinenbediener oder den Betreiber im System eingestellt werden oder durch ein Auftragsverwaltungssystem, das über Schnittstellen, insbesondere drahtlos, mit dem Arbeitsgerät kommuniziert. Die ackumulierte Masse bzw. Last $m_{last,total,n}$ kann durch die folgende Berechnungsvorschrift ermittelt werden:

$$m_{last,total,n} = \sum_{k=1}^{n} m_{last}(t_{zykl,ende,k}),$$

wobei $t_{zykl,ende,k}$ den Endzeitpunkt jedes Ladespiels darstellt. Beispiel: Für den Auftrag "xy" wurden 130t in einer Zeit von 3 Std. umgeschlagen.

Beispiel P2: Umschlagleistung bzw. bewegte Nutzlastmasse pro Zeit.

Hier kann z.B. die durchschnittliche Umschlagleistung des Arbeitsgeräts pro Zeiteinheit berechnet werden. Vorzugsweise können verschiedene Zeitbasen gemäß den Anforderungen nachgelagerter Auswertungssysteme konfiguriert werden. Beispiel: Umschlagsmasse (t) pro Stunde/Schicht/Tag. Die Ermittlung der durchschnittlichen Umschlagleistung pro Zyklus $m_{last,\varnothing,n}$ kann durch die folgende Berechnungsvorschrift ermittelt werden:

$$m_{last,\varnothing,n} = \frac{1}{n} m_{last,total,n}.$$

Beispiel P3: Treibstoffverbrauch oder Energiebedarf des Arbeitsgeräts pro umgeschlagener Masse, also z.B. l/t oder kwh/t.

Beispiel P4: Statistische Kennzahlen zur Klassifizierung von Ladezyklen.

Hier kann beispielsweise eine minimale, maximale oder durchschnittliche Zeit pro Ladespiel, sowie eine umgeschlagene Masse pro Ladezyklus (ein Ladezyklus ist insbesondere ein Arbeitsschritt, der eine Aufnahme einer Nutzlast, eine Ablage der Nutzlast und eine Bewegung des Arbeitsgeräts zur erneuten Aufnahme einer weiteren Nutzlast umfasst) bestimmt werden. Die durchschnittliche Zykluszeit $t_{zyl,\varnothing,n}$ kann anhand der ermittelten Zeitpunkte $t_{ablade,k}$ und $t_{ablade,k-1}$ und der Anzahl $n$ der Zyklen über die Formel:

$$t_{zyl,\varnothing,n} = \frac{1}{n} \sum_{k=1}^{n} t_{ablade,k} - t_{ablade,k-1}$$

berechnet werden. Die Zeitpunkte der Materialaufnahme $t_{ablade,k}$ und $t_{ablade,k-1}$ können durch manuelle Bedienung oder durch die Verknüpfung verschiedener Informationen wie z.B. Bedienhebeleingriffe des Maschinenbedieners oder andere Sensoren und Systeme bestimmt werden.

Beispiel P5: Geräteauslastung der Maschine pro Ladezyklus und statistische Bewertung über mehrere Ladespiele. Die Arbeitsgeräteauslastung kann mittels Kennzahlen des Antriebsystems und Leistungsparametern ermittelt werden. Mit diesen Werten und einer Klassifizierung können Lastkollektive ermittelt werden.

Weiterhin können Prädiktionen und Abschätzungen zum aktuellen Arbeitsprozess durchgeführt werden. Dem erfindungsgemäßen System ist dazu entweder über manuelle Eingaben oder von anderen Systemen und Planungswerkzeugen der Umfang des aktuellen Arbeitsauftrags bekannt. Somit kann z.B. die verbleibende Restbearbeitungszeit bis zum Abschluss des Auftrags ermittelt werden.

Es können auch Anpassungen am Arbeitsgerät vorgenommen werden, um den Arbeitsauftrag z.B. innerhalb der geforderten Zeit durchführen zu können.

Hierzu werden die Leistungskonfigurationen des Arbeitsgeräts sowie weitere einstellbare Kriterien wie z.B. eine energieeffiziente oder möglichst schnelle Bearbeitung des Auftrags berücksichtigt. Die Einstellungen des Arbeitsgeräts werden durch das System an die Durchführung des aktuellen Arbeitsauftrags angepasst und der Einsatz des Arbeitsgeräts optimiert.

Ist zudem ein Geländemodell vorhanden und die verfahrene Bahn des Arbeitsgeräts bzw. eines daran befestigten und die Nutzlast aufnehmenden Werkzeugs in Weltkoordinaten bekannt, kann eine Prädiktion der noch anfallenden Lastmasse angesichts eines geplanten Aushubs realisiert werden. Über die verfahrene Bahn des Werkzeugs kann mit dem Geländemodell das abgetragene Volumen abgeschätzt werden. Zum Beispiel lässt sich durch die Werkzeugposition und dem Höhenprofil des Geländes eine Volumendifferenz berechnen. Das Höhenprofil des Geländes wird entsprechend der Eindringtiefe des Werkzeugs angepasst. So lässt sich für jeden Zyklus das abgetragene Volumen $V_{last,n}(t_{zyl,ende,n})$ bestimmen. Analog zu den Berechnungen bei der Lastmasse lässt sich äquivalent das akkumulierte Volumen $V_{last,total,n}$ über alle bisherigen Zyklen erschließen. Mit diesen Informationen kann ein Schätzwert für die Dichte $\rho_{last,total,n}$ mit dem Quotienten:

$$\rho_{last,total,n} = \frac{m_{last,total,n}}{V_{last,total,n}}$$

gewonnen werden.

Ist ein Zielgeländeprofil definiert, kann über das aktuelle Geländeprofil erneut eine Volumendifferenz gebildet werden. Die Volumendifferenz beschreibt das verbleibende und voraussichtlich anfallende Volumen $V_{rest,n}$. Die noch anfallende Last kann damit über die Beziehung:

$$m_{rest,n} = \rho_{last,total,n} \cdot V_{rest,n}$$

abgeschätzt werden.

Durch die Auswertung dieser Daten können ebenfalls Informationen über das umgeschlagene Material ermittelt werden. Weiterhin kann in einem vernetzten Baustellen- oder Hafenverbund der Materialtransport durch nachgelagerte Systeme anhand der ermittelten Informationen organisiert werden.

Das erfindungsgemäße System kann dem Bediener beispielsweise durch die Anzeige der folgenden Informationen bei der Durchführung des Arbeitsauftrages assistieren:

Beispiel A1: Die umgeschlagenen Massen werden über mehrere Arbeitszyklen aufsummiert und dem Bediener angezeigt. Der Zähler kann vorzugsweise manuell zurückgesetzt werden.

Beispiel A2: Zur Durchführung von Arbeitsaufträgen kann vom Bediener ein Zielgewicht im System konfiguriert werden. Die umgeschlagene Masse wird nun aufsummiert und die Differenz zum konfigurierten Zielgewicht angezeigt. Das Zielgewicht kann weiterhin über Schnittstellen von externen Auftragsverwaltungssystemen vorgegeben werden.

Beispiel A3: Es können mehrere Zielorte und Massenzähler eingestellt werden. So können beispielsweise die verladenen Massen auf einen LKW und einen am LKW angehängten Anhänger separat verwogen werden.

Beispiel A4: Das erfindungsgemäße System kann unter Berücksichtigung des Werkzeuginhalts und der Kenntnis über das zu verladende Material dem Bediener Vorschläge zur Füllung des Werkzeugs unterbreiten. Hierbei wird die Differenz zum Zielgewicht des Auftrags berücksichtigt. Folgendes konkrete Beispiel soll dies verdeutlichen: Der Arbeitsauftrag umfasst die Bewegung einer Gesamtmasse von 9 t, die maximal zulässige oder befüllbare / aufnehmbare Masse im Werkzeug pro Umschlag beträgt 4 t. Das erfindungsgemäße System schlägt drei Ladespiele mit jeweils einer bewegten Masse von 3 t vor. Nach dem ersten Ladespiel wurden 3.6 t umgeschlagen, das System aktualisiert das Sollgewicht für die verbliebenen zwei Ladespiele auf jeweils 2.7 t. Nach dem zweiten Ladespiel erfolgt eine erneute Aktualisierung der verbleibenden zu bewegenden Masse.

**Patentansprüche**

1. Verfahren zur Bestimmung von Prozessdaten eines von einem Arbeitsgerät durchgeführten Arbeitsprozesses mit folgenden Schritten:

- Ermitteln der Masse einer durch das Arbeitsgerät bewegten Nutzlast mittels eines Wiegesystems des Arbeitsgeräts,
- Erfassen mindestens eines einen Zustand des Arbeitsgeräts und/oder einen Arbeitsschritt des aktuellen Arbeitsprozesses betreffenden Parameters,
- Bestimmen mindestens eines den aktuellen Arbeitsprozess betreffenden Prozessparameters unter Berücksichtigung der ermittelten Nutzlastmasse und des erfassten Parameters,
- Bestimmen mindestens eines einen verbleibenden Teil des aktuellen Arbeitsprozesses betreffenden Prädiktionswerts, und
- Ausgabe eines auf dem Prädiktionswert basierenden Signals an den Bediener des Arbeitsgeräts, um diesem bei der Durchführung des aktuellen Arbeitsprozesses zu assistieren, wobei das ausgegebene Signal ein erfasster Parameter, ein bestimmter Prädiktionswert, eine bisher bewegte Nutzlastmasse, die Differenz einer bisher bewegten Nutzlastmasse zu einer definierten oder definierbaren Zielmasse und/oder eine Vorgabe für eine in einem zukünftigen Arbeitsschritt aufzunehmende bzw. zu bewegende Nutzlastmasse ist oder betrifft.

2. Verfahren nach Anspruch 1, **dadurch gekennzeichnet, dass** die ermittelte Nutzlastmasse auf der Erfassung einer in einem Arbeitsschritt des aktuellen Arbeitsprozesses bewegten Nutzlastmasse basiert.

3. Verfahren nach Anspruch 2, **dadurch gekennzeichnet, dass** zur Erfassung der in einem einzelnen Arbeitsschritt des aktuellen Arbeitsprozesses bewegten Nutzlastmasse eine Schätzung auf Grundlage mindestens eines einen aktuellen Zustand des Arbeitsgeräts betreffenden und von einer Erfassungseinheit des Arbeitsgeräts gemessenen Zustandsparameters, insbesondere einer Winkelposition, Winkelgeschwindigkeit und/oder Winkelbeschleunigung eines Schwenkelements, Auslegerelements, Stielelements und/oder Hubwerks des Arbeitsgeräts, sowie mindestens eines die Konfiguration des Arbeitsgeräts betreffenden Systemparameters durchgeführt wird.

4. Verfahren nach einem der vorhergehenden Ansprüche, **dadurch gekennzeichnet, dass** der erfasste Parameter ein definierter oder definierbarer Zeitraum, die Zeitdauer eines Arbeitsschritts, eine definierte oder definierbare Anzahl von Arbeitsschritten, eine Kennzahl des Arbeitsgeräts, ein Maschinenparameter oder ein Leistungsparameter des Arbeitsgeräts ist.

5. Verfahren nach einem der vorhergehenden Ansprüche, **dadurch gekennzeichnet, dass** die Bestimmung des Prädiktionswerts unter Berücksichtigung von Daten erfolgt, die den Umfang des aktuellen Arbeitsprozesses betreffen, wobei die Daten vorzugsweise über eine manuelle Eingabe und/oder eine Übermittlung von einem externen Rechnersystem erhalten werden.

6. Verfahren nach einem der vorhergehenden Ansprüche, **dadurch gekennzeichnet, dass** der Prädiktionswert eine verbleibende Zeitdauer, eine verbleibende Umschlagmenge bzw. zu bewegende Nutzlastmasse, ein verbleibender Aushub, eine verbleibende Anzahl von Arbeitsschritten bis zur Beendigung des aktuellen Arbeitsprozesses, ein zu erwartender Energieverbrauch des Arbeitsgeräts oder eine noch zurückzulegende Strecke des Arbeitsgeräts oder eines oder mehrerer Bauteile des Arbeitsgeräts ist oder betrifft.

7. Verfahren nach einem der vorhergehenden Ansprüche, **dadurch gekennzeichnet, dass** unter Berücksichtigung des Prädiktionswerts eine Anpassung am Arbeitsgerät vorgenommen wird, insbesondere eine Veränderung mindestens eines Leistungsparameters, eine Änderung des Ablaufs eines Arbeitsschritts und/oder eine Änderung einer Konfiguration des Arbeitsgeräts, wobei die Anpassung manuell durch eine Benutzereingabe und/oder automatisch durch eine Steuereinheit des Arbeitsgeräts durchgeführt wird.

8. Verfahren nach Anspruch 7, **dadurch gekennzeichnet, dass** die Anpassung unter Minimierung oder Maximierung eines Prädiktionswerts und/oder unter Berücksichtigung mindestens eines definierten oder einstellbaren Kriteriums, insbesondere einer maximalen Zeitdauer, einer maximalen Umschlagmenge bzw. bewegten Nutzlastmasse, eines maximalen Energieverbrauchs des Arbeitsgeräts und/oder einer maximalen zurückgelegten Strecke des Arbeitsgeräts und/oder eines oder mehrerer Bauteile des Arbeitsgeräts, erfolgt.

9. Verfahren nach einem der vorhergehenden Ansprüche, **dadurch gekennzeichnet, dass** die Bestimmung des Prädiktionswerts unter Berücksichtigung eines Geländemodells des während des aktuellen Arbeitsprozesses von dem Arbeitsgerät zu bearbeitenden und/oder zu befahrenden Arbeitsbereichs erfolgt, wobei vorzugsweise ein das geplante Endergebnis des aktuellen Arbeitsprozesses betreffendes Zielgeländemodell definiert oder definierbar ist, welches der Bestimmung des Prädiktionswerts zugrunde gelegt wird.

10. Verfahren nach Anspruch 9, **dadurch gekennzeichnet, dass** zudem die Bahn berücksichtigt wird, entlang derer ein die Nutzlast bewegendes Werkzeug und/oder ein das Werkzeug bewegendes Hubwerk des Arbeitsgeräts während eines vergangenen oder mehrerer vergangener Arbeitsschritte in Bezug zu dem Geländemodell und/oder Zielgeländemodell verfahren wurde, wobei vorzugsweise ein bisher bewegtes oder abgetragenes Geländevolumen ermittelt wird.

11. Verfahren nach einem der vorhergehenden Ansprüche, **dadurch gekennzeichnet, dass** der Prozessparameter eine insgesamt bewegte Nutzlastmasse in einem definierten oder definierbaren Zeitraum oder für eine Anzahl von Arbeitsschritten, eine bewegte Nutzlastmasse pro definierter oder definierbarer Zeiteinheit oder pro Arbeitsschritt, ein Energieverbrauch des Arbeitsgeräts pro Arbeitsschritt oder pro bewegter Nutzlastmasse, eine Zeitdauer pro Arbeitsschritt oder eine Auslastung des Arbeitsgeräts insgesamt oder pro Arbeitsschritt ist oder betrifft.

12. Verfahren nach einem der vorhergehenden Ansprüche, **dadurch gekennzeichnet, dass** das ausgegebene, auf dem Prädiktionswert basierende Signal auf einer Anzeigeeinheit optisch angezeigt wird.

13. System zur Bestimmung von Prozessdaten eines von einem Arbeitsgerät durchgeführten Arbeitsprozesses, wobei das System ausgelegt ist, das Verfahren nach einem der vorhergehenden Ansprüche durchzuführen und folgendes umfasst:

- ein Hubwerk, welches ausgelegt ist, eine Nutzlast entlang eines Pfades zu bewegen, insbesondere mittels eines am Hubwerk montierten Werkzeugs,
- ein Wiegesystem, mittels welchem die Masse einer in einem einzelnen Arbeitsschritt des aktuellen Arbeitsprozesses bewegten Nutzlast ermittelbar ist,
- eine Erfassungseinheit, mittels welchem mindestens ein einen Zustand des Arbeitsgeräts und/oder einen Arbeitsschritt des aktuellen Arbeitsprozesses betreffender Parameter erfassbar ist,
- eine Steuereinheit, welche ausgelegt ist, mindestens einen den aktuellen Arbeitsprozess betreffenden Prozessparameter unter Berücksichtigung der ermittelten Nutzlastmasse und des erfassten Parameters zu bestimmen und mindestens einen einen verbleibenden Teil des aktuellen Arbeitsprozesses betreffenden Prädiktionswert zu bestimmen, und
- eine Ausgabeeinheit, über welche das auf dem bestimmten Prädiktionswert basierende Signal an den Bediener ausgebbar ist, wobei das ausgegebene Signal ein erfasster Parameter, ein bestimmter Prädiktionswert, eine bisher bewegte Nutzlastmasse, die Differenz einer bisher bewegten Nutzlastmasse zu einer definierten oder definierbaren Zielmasse und/oder eine Vorgabe für eine in einem zukünftigen Arbeitsschritt aufzunehmende bzw. zu bewegende Nutzlastmasse ist oder betrifft.

14. System nach Anspruch 13, **dadurch gekennzeichnet, dass** das System einen oder mehrere Sensoren umfasst, mittels welchem mindestens ein einen Zustand des Arbeitsgeräts und/oder einen Arbeitsschritt des aktuellen Arbeitsprozesses betreffender Parameter und/oder eine auf das Hubwerk wirkende Kraft erfassbar ist.

15. Arbeitsgerät mit einem System nach einem der Ansprüche 13 bis 14.

**Claims**

1. A method for determining process data of a work process carried out by an implement, comprising the following steps:

- determining the mass of a payload moved by the implement by means of a weighing system of the implement,
- detecting at least one parameter concerning a state of the implement and/or a work step of the current work process,
- determining at least one process parameter concerning the current work process by taking account of the determined payload mass and the detected parameter,
- determining at least one prediction value concerning a remaining part of the current work process, and
- outputting a signal based on the prediction value to the operator of the implement in order to assist the same in the execution of the current work process, wherein the output signal is or relates to a detected parameter, a determined prediction value, a payload mass moved so far, the difference of a payload mass moved so far to a defined or definable target mass and/or a specification for a payload mass to be picked up or to be moved in a future work step.

2. The method according to claim 1, **characterized in that** the determined payload mass is based on the detection of a payload mass moved in work step of the current work process.

3. The method according to claim 2, **characterized in that** for the detection of the payload mass moved in a single work step of the current work process an estimation is carried out on the basis of at least one state parameter concerning a current state of the implement and measured by a detection unit of the implement, in particular on the basis of an angular position, angular velocity and/or angular acceleration of a swivel element, boom element, arm element and/or hoisting gear of the implement, and on the basis of at least one system parameter concerning the configuration of the implement.

4. The method according to any of the preceding claims, **characterized in that** the detected parameter is a defined or definable period, the duration of a work step, a defined or definable number of work steps, a key figure of the implement, a machine parameter or a performance parameter of the implement.

5. The method according to any of the preceding claims, **characterized in that** the determination of the prediction value is effected by taking account of data concerning the scope of the current work process, wherein the data preferably are obtained via a manual input and/or a transmission from an external computer system.

6. The method according to any of the preceding claims, characterized that the prediction value is or relates to a remaining duration, a remaining handling volume or payload mass to be moved, a remaining excavation, a remaining number of work steps until termination of the current work process, an energy consumption of the implement to be expected or a distance still to be traveled by the implement or by one or more components of the implement.

7. The method according to any of the preceding claims, characterized that by taking account of the prediction value, an adaptation is made on the implement, in particular a variation of at least one performance parameter, a change in the sequence of a work step and/or a change in a configuration of the implement, wherein the adaptation is carried out manually by a user input and/or automatically by a control unit of the implement.

8. The method according to claim 7, characterized that the adaptation is made by minimizing or maximizing a prediction value and/or by taking account of at least one defined or adjustable criterion, in particular a maximum duration, a maximum handling volume or moved payload mass, a maximum energy consumption of the implement and/or a maximum distance traveled by the implement and/or by one or more components of the implement.

9. The method according to any of the preceding claims, **characterized in that** the determination of the prediction value is effected by taking account of a terrain model of the work area to be worked and/or traveled by the implement during the current work process, wherein preferably a target terrain model referring to the planned end result of the current work process is defined or definable, on which the determination of the prediction value is based.

10. The method according to claim 9, characterized that account also is made of the path along which a tool moving the payload and/or a hoisting gear of the implement moving the tool has been traversed with respect to the terrain model and/or target terrain model during one or more past work steps, wherein preferably a terrain volume moved or removed so far is determined.

11. The method according to any of the preceding claims, characterized that the process parameter is or relates to a payload mass moved as a whole in a defined or definable period or for a number of work steps, a moved payload mass per defined definable time unit or per work step, an energy consumption of the implement per work step or per moved payload mass, a duration per work step or a utilization of the implement as a whole or per work step.

12. The method according to any of the preceding claims, **characterized in that** the output signal based on the prediction value is visually displayed on a display unit.

13. A system for determining process data of a work process carried out by an implement, wherein the system is designed to carry out the method according to any of the preceding claims and comprises:

- a hoisting gear which is designed to move a payload along a path, in particular by means of a tool mounted on the hoisting gear,
- a weighing system by means of which the mass of a payload moved in a single work step of the current work process can be determined,
- a detection unit by means of which at least one parameter concerning a state of the implement and/or a work step of the current work process can be detected,
- a control unit which is designed to determine a process parameter concerning the current work process by taking account of the determined payload mass and the detected parameter and to determine at least one prediction value concerning a remaining part of the current work process, and
- an output unit via which the signal based on the determined prediction value can be output to the operator, wherein the output signal is or relates to a detected parameter, a determined prediction value, a payload mass moved so far, the difference of a payload mass moved so far to a defined or definable target mass and/or a specification for a payload mass to be picked up or to be moved in a future work step.

14. The system according to claim 13, characterized that the system comprises one or more sensors by means of which at least one parameter concerning a state of the implement and/or a work step of the current work process and/or a force acting on the hoisting gear can be detected.

15. An implement comprising a system according to any of claims 13 to 14.

**Revendications**

1. Procédé de détermination de données de processus d'un processus de travail exécuté par un appareil de travail, comprenant les étapes suivantes :

- déterminer la masse d'une charge utile déplacée par l'appareil de travail au moyen d'un système de pesage de l'appareil de travail,
- détecter au moins un paramètre concernant un état de l'appareil de travail et/ou une étape de travail du processus de travail actuel,
- déterminer au moins un paramètre de processus concernant le processus de travail actuel en tenant compte de la masse de charge utile déterminée et du paramètre détecté,
- déterminer au moins une valeur de prédiction concernant une partie restante du processus de travail actuel, et
- délivrer un signal basé sur la valeur de prédiction à l'opérateur de l'appareil de travail pour l'assister dans l'exécution du processus de travail actuel, le signal délivré étant ou concernant un paramètre détecté, une valeur de prédiction déterminée, une masse de charge utile déplacée jusqu'à présent, la différence entre une masse de charge utile déplacée jusqu'à présent et une masse cible définie ou définissable et/ou une spécification pour une masse de charge utile à prendre ou à déplacer dans une étape de travail future.

2. Procédé selon la revendication 1, **caractérisé en ce que** la masse de charge utile déterminée est basée sur la détection d'une masse de charge utile déplacée dans une étape de travail du processus de travail actuel.

3. Procédé selon la revendication 2, **caractérisé en ce que**, pour détecter la masse de charge utile déplacée dans une étape de travail individuelle du processus de travail actuel, une estimation est effectuée sur la base d'au moins un paramètre d'état concernant un état actuel de l'appareil de travail et mesuré par une unité de détection de l'appareil de travail, en particulier une position angulaire, une vitesse angulaire et/ou une accélération angulaire d'un élément pivotant, d'un élément de flèche, d'un élément de manche et/ou d'un mécanisme de levage de l'appareil de travail, ainsi qu'au moins un paramètre de système concernant la configuration de l'appareil de travail.

4. Procédé selon l'une quelconque des revendications précédentes, **caractérisé en ce que** le paramètre détecté est une période définie ou définissable, la durée d'une étape de travail, un nombre défini ou définissable d'étapes de travail, un indice de l'appareil de travail, un paramètre de la machine ou un paramètre de performance de l'appareil de travail.

5. Procédé selon l'une quelconque des revendications précédentes, **caractérisé en ce que** la détermination de la valeur de prédiction s'effectue en tenant compte de données qui concernent l'étendue du processus de travail actuel, les données étant obtenues de préférence par une entrée manuelle et/ou une transmission d'un système informatique externe.

6. Procédé selon l'une quelconque des revendications précédentes, **caractérisé en ce que** la valeur de prédiction est ou concerne une durée restante, une quantité de transbordement restante ou une masse de charge utile à déplacer, une excavation restante, un nombre restant d'étapes de travail jusqu'à la fin du processus de travail actuel, une consommation d'énergie attendue de l'appareil de travail ou une distance encore à parcourir par l'appareil de travail ou par un ou plusieurs composants de l'appareil de travail.

7. Procédé selon l'une quelconque des revendications précédentes, **caractérisé en ce que**, en tenant compte de la valeur de prédiction, une adaptation est effectuée sur l'appareil de travail, en particulier une modification d'au moins un paramètre de performance, une modification du déroulement d'une étape de travail et/ou une modification d'une configuration de l'appareil de travail, l'adaptation étant effectuée manuellement par une entrée de l'utilisateur et/ou automatiquement par une unité de commande de l'appareil de travail.

8. Procédé selon la revendication 7, **caractérisé en ce que** l'adaptation est effectuée en minimisant ou en maximisant une valeur de prédiction et/ou en tenant compte d'au moins un critère défini ou réglable, en particulier d'une durée maximale, d'une quantité maximale de transbordement ou d'une masse de charge utile déplacée, d'une consommation maximale d'énergie de l'appareil de travail et/ou d'une distance maximale parcourue par l'appareil de travail et/ou par un ou plusieurs composants de l'appareil de travail.

9. Procédé selon l'une quelconque des revendications précédentes, **caractérisé en ce que** la détermination de la valeur de prédiction s'effectue en tenant compte d'un modèle de terrain de la zone de travail à traiter et/ou à parcourir par l'appareil de travail pendant le processus de travail actuel, un modèle de terrain cible concernant le résultat final prévu du processus de travail actuel étant de préférence défini ou définissable, lequel modèle est pris comme base pour la détermination de la valeur de prédiction.

10. Procédé selon la revendication 9, **caractérisé en ce qu'**il est en outre tenu compte de la trajectoire le long de laquelle un outil déplaçant la charge utile et/ou un mécanisme de levage de l'appareil de travail déplaçant l'outil a été déplacé par rapport au modèle de terrain et/ou au modèle de terrain cible pendant une ou plusieurs étapes de travail passées, un volume de terrain déplacé ou enlevé jusqu'à présent étant de préférence déterminé.

11. Procédé selon l'une quelconque des revendications précédentes, **caractérisé en ce que** le paramètre de processus est ou concerne une masse de charge utile déplacée au total dans une période définie ou définissable ou pour un nombre d'étapes de travail, une masse de charge utile déplacée par unité de temps définie ou définissable ou par étape de travail, une consommation d'énergie de l'appareil de travail par étape de travail ou par masse de charge utile déplacée, une durée par étape de travail ou une utilisation de l'appareil de travail au total ou par étape de travail.

12. Procédé selon l'une quelconque des revendications précédentes, **caractérisé en ce que** le signal émis, basé sur la valeur de prédiction, est affiché visuellement sur une unité d'affichage.

13. Système pour déterminer des données de processus d'un processus de travail exécuté par un appareil de travail, le système étant conçu pour exécuter le procédé selon l'une quelconque des revendications précédentes et comprenant ce qui suit :

    - un mécanisme de levage qui est conçu pour déplacer une charge utile le long d'un chemin, en particulier au moyen d'un outil monté sur le mécanisme de levage,
    - un système de pesage au moyen duquel la masse d'une charge utile déplacée au cours d'une étape de travail individuelle du processus de travail actuel peut être déterminée,
    - une unité de détection au moyen de laquelle au moins un paramètre concernant un état de l'appareil de travail et/ou une étape de travail du processus de travail actuel peut être détecté,
    - une unité de commande qui est conçue pour déterminer au moins un paramètre de processus concernant le processus de travail actuel en tenant compte de la masse de charge utile déterminée et du paramètre détecté et pour déterminer au moins une valeur de prédiction concernant une partie restante du processus de travail actuel, et
    - une unité de sortie par laquelle le signal basé sur la valeur de prédiction déterminée peut être délivré à l'opérateur, le signal délivré étant ou concernant un paramètre détecté, une valeur de prédiction déterminée, une masse de charge utile déplacée jusqu'à présent, la différence entre une masse de charge utile déplacée jusqu'à présent et une masse cible définie ou définissable et/ou une spécification pour une masse de charge utile à prendre ou à déplacer dans une étape de travail future.

14. Système selon la revendication 13, **caractérisé en ce que** le système comprend un ou plusieurs capteurs, au moyen desquels au moins un paramètre concernant un état de l'appareil de travail et/ou une étape de travail du processus de travail actuel et/ou une force agissant sur le mécanisme de levage peut être détecté.

15. Appareil de travail comprenant un système selon l'une quelconque des revendications 13 à 14.

Fig. 1

Fig. 2

**IN DER BESCHREIBUNG AUFGEFÜHRTE DOKUMENTE**

**In der Beschreibung aufgeführte Patentdokumente**

- US 20190017249 A1

- DE 102018126809 A1